# EUROPEAN PATENT SPECIFICATION

(11) **EP 0 963 235 B1**
(45) Date of publication and mention of the grant of the patent: **17.12.2003**
(21) Application number: 98903327.9
(22) Date of filing: 03.02.1998
(51) Int. Cl.: B01D 47/06, F28F 25/12, B01D 53/78

(54) **OPEN CONTACT REACTOR**
OFFENER KONTAKTREAKTOR
REACTEUR PAR CONTACT OUVERT

(30) Priority: 05.02.1997 SE 9700393
(43) Date of publication of application: 15.12.1999
(73) Proprietor: ABB FLÄKT AKTIEBOLAG, 120 86 Stockholm (SE)
(72) Inventor: HALLDIN, Claes, S-360 32 Gemla (SE); AHMAN, Stefan, S-352 42 Växjö (SE); JOHANSSON, Lars-Erik, S-360 23 Älmeboda (SE); COLLINS, David, J., Knoxville, TN 37923 (US); BORIO, Donald, Knoxville, TN 37922 (US); DOUGHTY, Joseph, V., Knoxville, TN 37931 (US)
(74) Representative: Andersson, Per-Olof
(86) International application number: SE9800185
(87) International publication number: WO98033576

(56) References cited:
- WO-A-93/18842
- DE-C- 307 579
- US-A- 2 974 936

## Description

The present invention relates to an open contact reactor being in the form of a tank, in which a plurality of spray nozzles for spraying finely divided liquid are arranged and through which a gas is to be conducted in a main gas flow direction in order to be contacted with the finely divided liquid, the spray nozzles being arranged on different nozzle levels which are spaced apart in the main gas flow direction, and the nozzles on each level being substantially uniformly distributed over the cross-section of the tank.

Reactors of this type are used for various purposes. For instance, they can be used for cleaning of process gases containing gaseous pollutants, and for cooling/heating of gases. In these two applications, it seems possible to improve the efficiency of the reactor, i.e. increase the capacity of the reactor of respectively cleaning and cooling/heating the gases.

The object of the present invention therefore is to provide an open contact reactor, which has an improved efficiency in relation to prior-art reactors.

The document US-A-2 974 936 describes a reactor having gas guiding means in form of annular cones extending from the reaction wall.

According to the invention, this object is achieved by an open contact reactor, which is of the type described by way of introduction and which is characterised in that a gas guiding means, which extends along the circumference of the tank and is adapted to guide the gas flow closest to the wall of the tank towards the interior of the tank essentially perpendicular to the main gas flow direction, is arranged between the levels in at least one pair of juxtaposed nozzle levels, the guiding means extending into the tank to a distance from the wall thereof, which over the major part of the circumference of the wall at each point is 10-90% of the distance between the nozzle positioned closest to the respective point and the wall.

A gas guiding means preferably is arranged between the levels in each pair of juxtaposed nozzle levels.

The invention will now be described in more detail with reference to the accompanying drawing, in which:
Fig. 1 is a schematic vertical sectional view and illustrates a portion of an open contact reactor according to the invention, and
Fig. 2 is a schematic cross-sectional view along line II-II in Fig. 1.

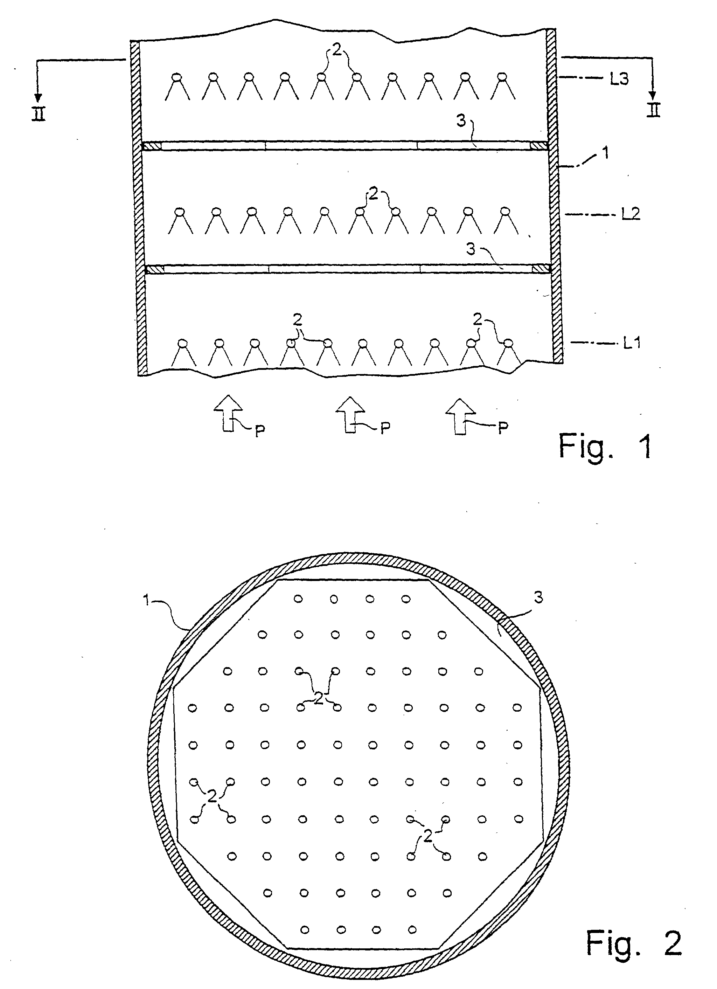

The open contact reactor shown in the drawing is in the form of an upright, essentially circular-cylindrical tank 1, of which merely a portion is illustrated in Fig. 1.

A plurality of spray nozzles 2 for spraying finely divided liquid are arranged in the tank 1. The spray nozzles 2 are arranged on a plurality of vertically spaced-apart levels L1, L2, L3, the nozzles on each level being uniformly distributed over the cross-section of the tank 1, except in the portion positioned closest to the circumference of the tank 1, in which portion there are no spray nozzles and/or parts of spray nozzles that would imply a uniform distribution over the entire cross-section. Each nozzle 2 has a circumferential, conical spray action, by which is here meant that it sprays liquid essentially uniformly distributed over an intended cone or an intended truncated cone.

In the embodiment shown, the spray action of the nozzles 2 is directed downwards. However, it will be appreciated that their spray action can also be directed upwards or be directed both upwards and downwards.

In the embodiment shown, the reactor is used for cleaning process gases containing gaseous pollutants. The process gases are conducted essentially vertically through the tank 1 in the direction of the arrows P in order to be contacted with the finely divided liquid. In other applications, the process gases can be conducted through the tank 1 in the direction opposite to the direction of arrows P. In this embodiment, the liquid consists of water and an absorbent dissolved or suspended therein, which reacts with the gaseous pollutants in the process gases.

Between the levels in each pair of juxtaposed levels L1, L2, L3 there is arranged a circumferential gas guiding means 3, which extends along the circumference of the tank 1. The gas guiding means 3 are adapted to guide the gas flow closest to the wall of the tank 1 towards the centre axis of the tank essentially perpendicular thereto and, thus, essentially perpendicular to the main gas flow direction P.

Each gas guiding means 3 has the form of a simple, circumferential horizontal flange, but, for guiding the gas flow towards the centre axis of the container 1, it may also have another form which is suitable for the purpose. For instance, the gas guiding means 3 can be arcuate in cross-section, but it may also have a more complicated shape and consist of, for instance, a series of bucket-shaped gas guiding elements which are juxtaposed along the circumference of the tank 1. The gas guiding means 3 functions to some extent also as liquid guiding means by the gas flow guided towards the centre axis of the tank 1 entraining liquid which is collected on the wall of the tank 1.

In the illustrated embodiment, the gas guiding means 3 extends into the tank 1 to a distance from the wall thereof, which distance over the major part of the circumference of the wall at each point corresponds to about 50% of the distance between the nozzle 2 positioned closest to the respective point and the wall. As shown in the drawing, this means in the embodiment shown that the circumferential horizontal flange has a horizontal width varying along the circumference. Said distance of the gas guiding means 3 may, however, vary between 10 and 90% of said nozzle distance and preferably is between 30 and 65%.

The arrangement of the gas guiding means 3 has been found to increase the efficiency of the reactor in a favourable manner.

## Claims

1. An open contact reactor being in the form of a tank (1), in which a plurality of spray nozzles (2) for spraying finely divided liquid are arranged and through which a gas is to be conducted in a main gas flow direction (P) in order to be contacted with the finely divided liquid, the spray nozzles (2) being arranged on different nozzle levels (L1, L2, L3) which are spaced apart in the main gas flow direction, and the nozzles (2) on each level being substantially uniformly distributed over the cross-section of the tank, **characterised in that** a gas guiding means (3), which extends along the circumference of the tank (1) and is adapted to guide the gas flow closest to the wall of the tank towards the interior of the tank essentially perpendicular to the main gas flow direction (P), is arranged between the levels in at least one pair of juxtaposed nozzle levels (L1-L2, L2-L3), the guiding means (3) extending into the tank (1) to a distance from the wall thereof, which over the major part of the circumference of the wall at each point is 10-90% of the distance between the nozzle (2) positioned closest to the respective point and the wall.

2. The reactor as claimed in claim 1, **characterised in that** said gas guiding means (3) is arranged between the levels in each pair of juxtaposed nozzle levels (L1-L2, L2-L3).

## Patentansprüche

1. Offener Kontaktofen, der die Form eines Behälters (1 ) hat, in dem eine Vielzahl von Sprühdüsen (2) zum Versprühen feinverteilter Flüssigkeit angeordnet sind und durch den ein Gas in einer Haupt-Gasstromrichtung (P) zu leiten ist, um mit der feinverteilten Flüssigkeit in Kontakt zu kommen, wobei die Sprühdüsen (2) auf unterschiedlichen Düsenebenen (L1, L2, L3) angeordnet sind, die in der Haupt-Gasstromrichtung voneinander beabstandet sind, und die Düsen (2) auf jeder Ebene im Wesentlichen gleichmäßig über den Querschnitt des Behälters verteilt sind, **dadurch gekennzeichnet, dass** eine Gasleiteinrichtung (3), die sich am Umfang des Behälters (1) entlang erstreckt und so eingerichtet ist, dass sie den Gasstrom am nächsten an der Wand des Behälters auf das Innere des Behälters zu im Wesentlichen senkrecht zu der Haupt-Gasstromrichtung (P) leitet, zwischen den Ebenen in wenigstens einem Paar nebeneinander befindlicher Düsenebenen (L1-L2, L2-L3) angeordnet ist, wobei sich die Leiteinrichtung (3) in den Behälter (1) hinein über eine Strecke von der Wand desselben aus erstreckt, die über den Hauptteil des Umfangs der Wand an jedem Punkt 10-90% der Strecke zwischen der Düse (2), die sich am Nächsten an dem entsprechenden Punkt befindet, und der Wand beträgt.

2. Ofen nach Anspruch 1, **dadurch gekennzeichnet, dass** die Gasleiteinrichtung (3) zwischen den Ebenen in jedem Paar nebeneinander befindlicher Düsenebenen (L1-L2, L2-L3) angeordnet ist.

## Revendications

1. Réacteur de contact ouvert se présentant sous la forme d'une cuve (1), dans laquelle une pluralité de buses de pulvérisation (2) servant à projeter un liquide finement divisé sont disposées et dans laquelle un gaz doit être conduit dans une direction principale (P) d'écoulement du gaz pour être mis en contact avec le liquide finement divisé, les buses de pulvérisation (2) étant disposées à différents niveaux (L1, L2, L3), qui sont espacées dans la direction principale d'écoulement du gaz, et les buses (2) situées à chaque niveau étant réparties d'une manière essentiellement uniforme sur la section transversale de la cuve, **caractérisé en ce que** des moyens (3) de guidage du gaz, qui s'étendent le long de la circonférence de la cuve (1) et sont adaptés pour guider l'écoulement de gaz le plus près de la paroi de la cuve en direction de l'intérieur de la cuve essentiellement perpendiculairement à la direction principale (P) d'écoulement du gaz, sont disposées entre les niveaux d'au moins une paire de niveaux juxtaposés (L1-L2, L2-L3) de buses, des moyens de guidage (3) s'étendant dans la cuve (1) à une distance de la paroi de cette dernière, qui sur la majeure partie de la circonférence de la paroi, est égale en chaque point à 10-90 % de la distance entre la buse (2) disposée le plus près du point respectif et la paroi.

2. Réacteur selon la revendication 1, **caractérisé en ce que** lesdits moyens (3) de guidage du gaz sont disposés entre les niveaux de chaque paire de niveaux juxtaposés (L1-L2, L2-L3) de buses.
